# EUROPEAN PATENT APPLICATION

(11) **EP 4 283 114 A1**
(43) Date of publication of application: **29.11.2023**
(21) Application number: 22213095.7
(22) Date of filing: 13.12.2022
(51) Int. Cl.: F03D 1/04

(54) **WIND TURBINE WITH HORIZONTAL ROTATION AXIS OF A ROTOR**

(30) Priority: 26.05.2022 PL 44128422
(71) Applicant: Akademia Gorniczo-Hutnicza im. Stanislawa Staszica w Krakowie, 30-059 Krakow (PL)
(72) Inventor: JASZCZUR, Marek, 30-806 Kraków (PL); KARCH, Micha, 32-600 O wi cim (PL); ZWOLI SKA, Klaudia, 25-316 Kielce (PL)
(74) Representative: Balinska, Ewa

(57) **Abstract**

The invention relates to the design of a wind turbine with a horizontal rotation axis of a rotor, which has a high energy efficiency at low wind speeds and simplifies its installation directly on a roof of a building.

The wind turbine with a horizontal rotation axis of the rotor has a body (1) in the form of a diffuser, the inlet opening (2) of which has a circular cross-section and the outlet opening (3) has a square cross-section. The hub (4) of the rotor (5) is fixed via radial ribs (6) in the inlet opening (2) of the diffuser (1). The length of the side (7) of the outlet opening (3) of the diffuser (1) and the distance between the inlet opening (2) and the outlet opening (3) of the diffuser (1) are equal to the diameter (D) of the inlet opening (2).

## Description

The invention relates to a wind turbine with horizontal rotation axis of a rotor designed for a household use and for being mounted on single-family houses, especially in areas where low wind speeds occur.

Currently used low-power wind turbines are mostly adapted for being mounted on special masts or towers. These have structures that require a suitable site for their construction. A number of wind power engineering solutions can be found on the market, but most of them are classic wind turbines, with limited energy efficiency which is limited due to the low wind speeds that occurs in the prevailing area of our country as well as due to installation possibilities. Also known are wind turbine constructions with elements that improve their efficiency that are equipped with a rotor having a constriction located at the front of the rotor as an element that is a cumulative element for an air stream, or as an element in the form of an extension that causes an increase in a speed of flow through the rotor.

A wind turbine is known from US2012175882 A1 in which a system based on the shape of a Venturi tube with diffuser-nozzles is used. The wind turbine has a body having a compression inlet section in the shape of a funnel, the end of which goes into an outlet Venturi tube section also in the shape of a funnel, that section is equipped with diffuser-injectors located in the Venturi tube to ensure a smooth flow of accelerated air. A turbine with blades is mounted between the inlet section having a circular cross-section, and the outlet section having a circular cross-section.

A wind turbine diffuser with adjustable geometry is known from Polish patent description No. PL222125 B1. The diffuser consists of an element in the shape of a rigid, hollow ring that has conduits of resilient material attached on its side surface along its perimeter, which the conduits supplying a fluid to the interior of the element and discharging a fluid from the interior. At least one surface element is attached to the element in the shape of a rigid hollow ring as well as to the conduits of resilient material. A turbine is fixed inside the diffuser, and an inlet and an outlet of the diffuser have circular cross sections.

A wind turbine structure with a horizontal-axis diffuser consisting of a rotor, a direct-drive generator, a deflection mechanism and a diffuser, as well as a wind turbine support system is known from patent publication No. IN201621021010A. The turbine body has a diffuser-like shape, whose inlet and outlet have a circular cross-section, wherein the wind turbine attached to a support structure in the form of a pole.

A wind turbine with variable geometry of a diffuser, which turbine increases a rotor speed, is known from the patent No. US7256512 B1. In this solution, the diffuser consists of plane elements that are arranged around the rotor of the wind turbine, which plane elements form a common plane of the diffuser. These planes can take different shapes of a cross-section. Following the wind speed changes, the planes change their position and thus causes the wind turbine rotor speed to increase. The wind turbine has a vertical support structure, and has a complicated mechanism for adjusting geometry of the diffuser.

The purpose of the invention is to develop a design of a wind turbine with a horizontal rotation axis of a rotor and having high energy efficiency at low wind speeds and which can be installed directly on a building.

The essence of a wind turbine with a horizontal rotation axis of a rotor according to the invention, which has a body in the form of a diffuser having an inlet opening of a circular cross-section in which the rotor hub is fixed by means of radial ribs, consists in that the inner surface of the diffuser body is equipped with evenly distributed identical longitudinal protrusions that run along the direction of an air flow in the diffuser forming a regular grid system, the protrusions have the height that is equal to 0.04 of their length L and the width that is equal to 0.3L. An outlet opening of the diffuser has a square cross-section, wherein the length of the side of the outlet opening of the diffuser body and the distance between the inlet opening and the outlet opening of the diffuser body are both equal to the diameter of the inlet opening.

Preferably, the longitudinal protrusions have a shape of a pyramid with a base of the hexagonal shape.

Preferably, the longitudinal protrusions have the shape of a truncated pyramid with a hexagonal shaped base.

Thanks to the use of a specially shaped rotor blades, that are adapted to the wind conditions occurring in the area of our country, as well as thanks to increasing the speed of the incoming wind on the rotor, that is, the square shape of the diffuser outlet, the structure of the wind turbine allows its installation directly on the building. The shape of the diffuser used allows better utilization of wind energy even at low speeds where the turbine in most solutions cannot be set in motion. The design of the air damming element, which has an inlet with a circular cross-section and an outlet with a square cross-section, makes it possible to achieve higher turbine efficiency than in case of solutions with diffusers having the same cross-sectional shape, furthermore, it fits better to the flat surfaces of the building. Additionally, the use of a specifically designed structural inner surface of the diffuser, which is provided with longitudinal protrusions significantly improves the flow parameters and the acoustic parameters of the wind turbine, that are extremely important in urban areas and for installations on or near buildings. As a result of the used construction the wind turbine according to the invention allows to achieve higher air velocities in the diffuser and moreover, to make better use of a wind energy and to reduce the noise generated by the turbine and the air flow. Tests carried out have shown that the use of a wind turbine with a horizontal rotation axis of a rotor according to the invention allows one to increase its output power by 100% in comparison to conventional turbines which do not have a diffuser body with a structured surface having a variable cross-sectional area.

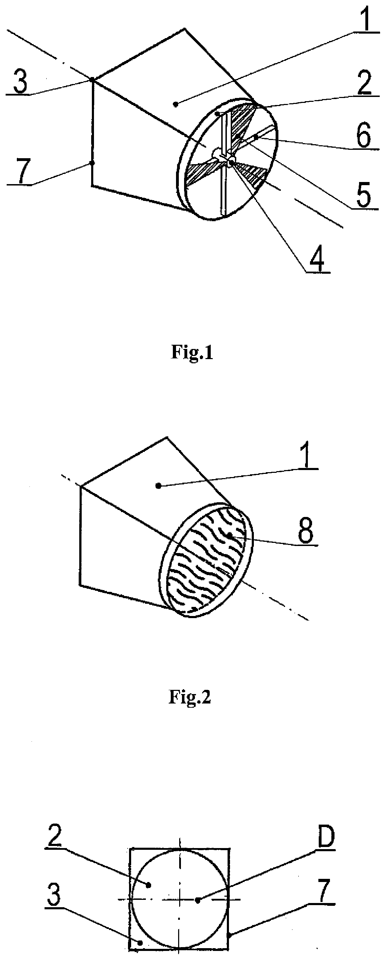

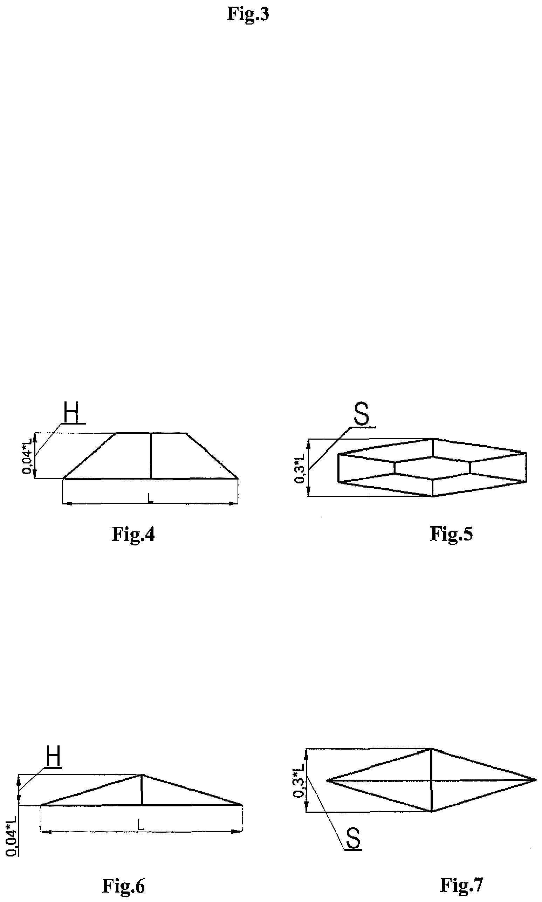

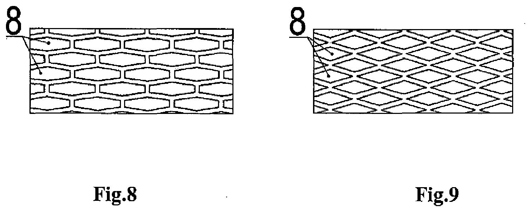

The solution of the invention is presented in an embodiment on the drawing, in which fig. **1** schematically shows in axonometric view a wind turbine with a horizontal rotation axis of a rotor, fig. **2** shows schematically in axonometric view a wind turbine with a horizontal rotation axis of a rotor without the rotor, fig. **3** shows in front view the body without the rotor, fig. **4** shows in a side view a longitudinal protrusion in the shape of a truncated pyramid having a hexagonal base, fig. **5** shows a top view of a longitudinal protrusion in the shape of a truncated pyramid with a hexagonal base, fig. **6** shows in side view a longitudinal protrusion in the shape of a pyramid with a rhombus-shaped base, fig. **7** shows in top view longitudinal protrusion in the shape of a pyramid with a rhombus-shaped base, fig. **8** shows an arrangement of a regular grid consisting of longitudinal protrusions in the shape of a truncated pyramid with a hexagonal base, and fig. **9** shows an arrangement of a regular grid consisting of longitudinal protrusions in the shape of a pyramid with a rhombus-shaped base.

The wind turbine with a horizontal rotation axis of a rotor has a body 1 in the form of a diffuser having an inlet opening 2 which has a circular cross-section, wherein an outlet opening 3 has a square-shaped cross-section. A hub 4 of the rotor 5 is fixed in the inlet opening 2 of the diffuser 1 through the radial ribs 6. The length of the side 7 of the outlet opening 3 of the diffuser 1 and the distance between the inlet opening 2 and the outlet opening 3 of the diffuser 1 are equal to a diameter D of the inlet opening 2.

The inner surface of the body 1 is provided with evenly distributed, equal longitudinal protrusions 8, which run along the direction of an air flow forming a regular grid system. The height H of the protrusions 8 is equal to 0.04 of their length L and the width S of them is equal to 0.3L. The longitudinal protrusions 8 have the shape of a pyramid with a rhombus-shaped base, where studies have shown that equally good energy efficiency can be achieved if the protrusions 8 on the inner surface of the body 1 have the shape of a truncated pyramid with a hexagonal-shaped base. The elongated protrusions 8 on the inner surface of the body 1 of the diffuser ensure optimal air flow through its interior and reduce the noise generated by the wind turbine.

## Claims

1. Wind turbine with a horizontal rotation axis of a rotor having a body in the form of a diffuser with an inlet opening which has a circular cross-section, in which inlet opening a hub of the rotor is fixed via radial ribs, **characterized in that** the inner surface of the body (1) is provided with evenly distributed equal longitudinal protrusions (8) which run along the direction of an air flow in the diffuser and which form a regular grid system and which have the height (H) that is equal to 0.04 of their length (L) and the width (S) that is equal to 0.3L, in turn the outlet opening (3) of the diffuser has a square-shaped cross-section, wherein the length of the side (7) of the outlet opening (3) of the body (1) and the distance between the inlet opening (2) and the outlet opening (3) of the body (1) are equal to the diameter (D) of the inlet opening (2).

2. The wind turbine according to claim 1, **characterized in that** the longitudinal protrusions (8) have the shape of a pyramid with a base of the rhombus shape.

3. The wind turbine according to claim 1, **characterized in that** the longitudinal protrusions (8) have the shape of a truncated pyramid with a hexagonal-shaped base.
